# EUROPÄISCHE PATENTSCHRIFT

(11) **EP 0 931 020 B1**
(45) Veröffentlichungstag und Bekanntmachung des Hinweises auf die Patenterteilung: **08.05.2002**
(21) Anmeldenummer: 97942010.6
(22) Anmeldetag: 09.09.1997
(51) Int. Cl.: C01F 7/02, C01F 7/36, B01J 20/08, B01J 37/02, B01J 21/04

(54) **ALUMINIUMOXIDISCHE MASSEN MIT SEHR ENGER PORENRADIENVERTEILUNG**
ALUMINIUM OXIDE MASSES WITH VERY NARROW PORE RADIUS DISTRIBUTION
MATIERES EN OXYDE D'ALUMINIUM A DISTRIBUTION TRES SERREE DES RAYONS DES PORES

(30) Priorität: 19.09.1996 DE 19638442
(43) Veröffentlichungstag der Anmeldung: 28.07.1999
(73) Patentinhaber: SÜD-CHEMIE AG, 80333 München (DE)
(72) Erfinder: VON THIENEN, Norbert, D-20539 Hamburg (DE); SINN, Hansjörg, D-22844 Norderstedt (DE)
(74) Vertreter: Reitzner, Bruno, Dr.
(86) Internationale Anmeldenummer: EP9704934
(87) Internationale Veröffentlichungsnummer: WO9812142

(56) Entgegenhaltungen:
- EP-A- 0 748 652
- US-A- 4 389 385
- US-A- 4 729 890
- US-A- 5 622 684
- VAUDRY F ET AL: "SYNTHESIS OF PURE ALUMINA MESOPOROUS MATERIALS" CHEMISTRY OF MATERIALS, Bd. 8, Nr. 7, Juli 1996, Seiten 1451-1464, XP000626883
- Harlan C. et al. "tert-Butylaluminium Hydroxides and Oxides: Structural Relationship between Alkylalumoxanes and Alumina Gels", Organometallics, Bd. 13, No.8, 1994, Seiten 2957-69

## Beschreibung

Die Erfindung betrifft aluminiumoxidische Massen mit sehr enger Porenradienverteilung, die insbesondere zur Herstellung von Katalysatoren und/oder Adsorptionsmitteln geeignet sind.

Normalerweise ist es wünschenswert, daß Katalysatoren eine große Oberfläche haben. Da durch Zerkleinerung die Oberfläche nur langsam und aufwendig gesteigert werden kann, wird versucht, durch die Bildung sehr feiner Kanäle, sogenannter Poren, einem Katalysatormaterial eine große "innere Oberfläche" zu geben. Für zylindrische Poren gilt die Beziehung Innere Oberfläche = 2 x Porenvolumen/Porenradius.

Für Poren, die einen Radius von 4 nm und ein Porenvolumen von 1 cm³g⁻¹ haben, ergibt sich eine innere Oberfläche von 1.000 m²g⁻¹. Solche Materialien sind schon handelsüblich.

Allerdings kommt es nicht nur auf die Größe der inneren Oberfläche an, sondern auch darauf, daß die Wände der Katalysatorporen die richtige geeignete Struktur haben. Wandstrukturen der Katalysatorporen (saure, basische Zentren, Öffnungen, Metallcluster usw.) werden als Ursache für aktive Stellen (active sites) angesehen.

Die Poren heute üblicher Katalysatoren, abgesehen von dem Sonderfall der Zeolithe, sind in ihrer Porengröße und Porenform nicht einheitlich. Man bezeichnet Poren mit mehr als 25 nm Radius als Makroporen, Poren mit einem Radius von 1 bis 25 nm werden als Mesoporen bezeichnet. Die Poren mit einem Radius kleiner 1 nm sind die sogenannten Mikroporen.

Die Makro- und Mesoporen sind im allgemeinen durch die Abstände zwischen den Primärteilchen bedingt. Die Mikroporen werden auf Risse mit nahezu atomaren Dimensionen innerhalb der Primärteilchen zurückgeführt. Bei den Zeolithen, die in der Natur vorkommen, aber auch synthetisiert werden können, liegen kubooktraedische Strukturen vor. Ihre Strukturelemente sind Si-O-Al-Strukturen. Ihre Besonderheit besteht darin, daß sie relativ große Hohlräume (Käfige) umgeben, die über im Vergleich dazu enge Öffnungen zugänglich sind. Sie haben eine sehr große innere Oberfläche in Form ihrer Poren mit festgelegter Symmetrie.

Der Erfindung lag die Aufgabe zugrunde, aluminiumoxidische Massen mit hoher spezifischer Oberfläche und einer engen Porenradienverteilung bereitzustellen.

Gegenstand der Erfindung sind somit aluminiumoxidische Massen, die durch eine spezifische Oberfläche von ≥ 70 m²/g und eine enge Porenradienverteilung von ≥ 90% zwischen 1,7 und 2,2 nm gekennzeichnet sind, worin das Verhältnis MoO₃/Al₂O₃ ≠ 0,13 und das Verhältnis NiO/Al₂O₃ ≠ 0,06 ist.

Vorzugsweise ist die spezifische Oberfläche ≥ 100 m²/g und die Porenradienverteilung ≥ 95% zwischen etwa 1,8 und 2,1.

Diese Massen können herstellungsbedingt auch geringe Anteile an aluminiumoxocarbidischen Strukturen enthalten. Ferner können Sie mit -Si-O-Strukturen und/oder katalytisch wirksamen Substanzen, insbesondere mit katalytisch wirksamen Metallen, dotiert sein.

Die Massen können in stückiger Form vorliegen, so daß sie, gegebenenfalls nach einer weiteren Zerkleinerung, für Wirbelschichtverfahren eingesetzt werden können. Ferner können die Massen mit mindestens einem Zeolith verbunden sein.

Die erfindungsgemäßen aluminiumhaltigen Massen können dadurch hergestellt werden, daß man ein Aluminoxan mit dem strukturellen Grundelement -Al-O-Al- und/oder einem oligomeren strukturellen Grundelement Al-O-Al-O-Al-O-Al-, worin die freien Bindungen durch organische Reste, vorzugsweise Alkylreste, besetzt sind, zunächst einer schonenden Hydrolyse und anschließend einer Thermolyse bei Temperaturen von etwa 300 bis 900°C unterwirft.

Vorzugsweise führt man die Hydrolyse in der Wirbelschicht durch, insbesondere bei Temperaturen von etwa 10 bis 100 °C.

Vorzugsweise geht man von einem Aluminoxan aus, in welchem die freien Bindungen durch niedere Alkylgruppen, insbesondere Methylgruppen, besetzt sind.

Man kann hierbei von einem Aluminoxan ausgehen, das in höheren Kohlenwasserstoffen, wie Toluol oder in polaren Verbindungen, wie Dioxan oder Diethylether hergestellt worden ist.

Man kann auch von Aluminoxanen ausgehen, die mit Siloxanen (Silanolen) und/oder katalytisch wirksamen Substanzen, wie Metallen, dotiert worden sind.

Wenn es wünschenswert ist, Si-O-Gruppen einzuführen, werden die Aluminoxane in an sich bekannter Weise vor der erfindungsgemäßen Behandlung mit Silanolen umgesetzt. Wenn Dotierungen, insbesondere durch Schwermetalle, erwünscht sind, können den Lösungen bzw. Suspensionen der Aluminoxane Schwermetallverbindungen wie z.B. Acetylacetonate zugefügt werden, wobei die Schwermetalle reduziert werden und sich in feinster Verteilung im Aluminoxan niederschlagen.

Zur Herstellung von zeolithhaltigen Massen kann man die Umsetzung der Aluminoxane, gegebenenfalls zusammen mit den Dotierungssubstanzen, in Gegenwart mindestens eines Zeoliths durchführen und das gegebenenfalls in stückiger Form anfallende Umsetzungsprodukt zerkleinern.

Hierbei können pulvrige Zeolithe in die Lösung der Aluminoxane eingerührt werden. Nach erfindungsgemäßer Behandlung der Aluminoxane enthalten die erhaltenen Massen die Zeolithe mit unveränderter Aktivität. Da die erfindungsgemäß hergestellte Masse grobstückig ist, ist dies besonders dann von Interesse, wenn sehr feinkörnige Zeolithe in Wirbelschichten, die eine bestimmte Korngröße voraussetzen, eingesetzt werden sollen, da das grobstückige Material beliebig zerkleinert werden kann.

Die Aggregate haben eine bimodale Porenstruktur, die einerseits durch die Porenstruktur der aluminiumoxidischen Massen und andererseits durch die Porenstruktur der Zeolithe bedingt ist. Auf diese Weise ist es möglich, die Selektivität der aus den Massen hergestellten Katalysatoren bzw. Adsorptionsmittel zu beeinflussen.

Gegenstand der Erfindung ist auch die Verwendung der vorstehend definierten Massen zur Herstellung von Katalysatoren und/oder Adsorptionsmitteln.

Die erfindungsgemäß verwendeten Aluminoxane wurden im Zuge von Forschungsarbeiten über Ziegler-Natta-Katalysatoren untersucht. Deren strukturelles Grundelement ist eine Al-O-Al-Struktur. In erheblichem Umfang sind auch oligomere-Al-O-Al-O-Al-O-Al-Strukturelemente vorhanden, wobei bei den Aluminoxanen die freien Bindungen des Al durch organische Gruppen, insbesondere Alkylgruppen besetzt sind. In besonderen Fällen, besonders beim Methylaluminoxan, entstehen auch kubooktaedrische Strukturen mit der Zusammensetzung [Al₁₆O₁₂(CH₃)₂₄] x 2Al(CH₃)₃, die sich auf Basis koordinativer Absättigung einer Grundeinheit verstehen lassen. Hierzu wird auf die Literaturstelle "Macromolecular Symposia Aluminoxanes", Macromol. Symp. Vol. 97; insbesondere A. R. Barron Seiten 15-25; H. Sinn Seiten 27-52 verwiesen.

Es wurde zunächst untersucht, ob bei Beseitigung der Alkylgruppen durch Hydrolyse oder Thermolyse große innere Oberflächen gebildet werden können. Bei einer Hydrolyse mit größeren Mengen an Wasserdampf oder flüssigem Wasser wurden jedoch die -Al-O-Al-O-Al-Strukturen unter Bildung von Aluminiumhydroxid zerstört, wobei zwar Aluminiumoxide mit hoher Oberläche, aber mit einer sehr weiten Porenradienverteilung erhalten wurden. Eine schonende Hydrolyse mit geringen Mengen an Wasserdampf führte zu Produkten mit einer niedrigen Oberfläche und einer weiten Porenradienverteilung. Wurde anstelle einer Hydrolyse eine Thermolyse eingesetzt, so erhielt man Aluminiumoxocarbide mit einer geringen spezifischen Oberfläche und einer weiten Porenradienverteilung.

Erst mit der erfindungsgemäßen Kombination von schonender Hydrolyse und Thermolyse konnten Massen mit der angegebenen hohen inneren spezifischen Oberfläche und enger Porenradienverteilung erhalten werden. Die schonende Hydrolyse wird vorzugsweise in der Wirbelschicht durchgeführt, wobei das Aluminoxan vorzugsweise mit Stickstoff oder Argon gewirbelt wurde, wobei dem Inertgas kleinste Mengen an gasförmigem Wasser zugesetzt wurden, mit der Maßgabe, daß die Taupunktsgrenze stets unterschritten blieb. Dies wurde zum Beispiel dadurch erreicht, daß das Wirbelgas über gekühltem Eis bei tiefer Temperatur Wasserdampf aufnahm (Wasserdampf-Partialdruck etwa 0,5 bis 5 mbar) und dann vor Berührung mit dem zu hydrolysierenden Wirbelgut auf höhere Temperatur gebracht wurde (etwa 0 bis 100 °C, vorzugsweise etwa 20°C über der Sättigungstemperatur).

Die Porenradienverteilung der erhaltenen Produkte liegt überwiegend (> 95%) zwischen etwa 1,8 und 2,1 nm. Die erhaltenen aluminiumoxidischen Massen haben also Porenradien, die deutlich höher sind als die von Zeolithen, die im allgemeinen zwischen etwa 0,3 und 1 nm liegen.

Die Oberflächenbestimmungen erfolgten nach BET an einem Sorptomatic 1900 der Firma Carlo Erba. Die Auswertung erfolgte nach BET im Programm MILESTON 100. Als Meßgas diente Stickstoff bei -195,82 °C und einem Arbeitsdruck von 800 torr. Die Adsorption erfolgte bis ca. 780 torr, die Desorption wurde vom Enddruck der Adsorption bis ca. 30 torr aufgezeichnet. Aus den erhaltenen Kurven konnte auch die Porenradienverteilung abgelesen werden.

Die Erfindung ist durch die nachstehenden Beispiele erläutert, wobei die Beispiele 1 bis 6 die Herstellung der Aluminoxane und die Beispiele 7 und 8 die Herstellung der erfindungsgemäßen aluminiumoxidischen Massen durch Hydrolyse und Thermolyse erläutern.

### Beispiel 1

### Herstellung von Methylaluminoxan aus Toluol

Es kann käufliches Methylaluminoxan verwendet werden. Im vorliegenden Fall wurden Aluminoxane verwendet, die durch Überleiten einer Lösung von Aluminiumtrimethyl in Toluol bei - 40°C über eine auf -40°C gekühlte Eisfläche hergestellt wurden (vgl. Sinn, Bliemeister, Tikwe, Clausnitzer, Winter und Zarnke, "Some new Results on Methyl-Alumoxane" in W. Kaminsky, H. Sinn (Editors), "Olefin Polymerisation", Springer Verlag 1988, S. 257 ff.). Das Lösungsmittel wurde im Vakuum abdestilliert, Reste bei 10⁻⁴ mbar abkondensiert. Das glasige bzw. nach Zerstoßen pulvrige Material wurde nach Beispiel 7 der Hydrolyse, nach Beispiel 8 der Pyrolyse bzw. der Hydrolyse mit anschließender Pyrolyse unterworfen.

### Beispiel 2

### Herstellung von Methylaluminoxan aus Dioxan

Zu einer Lösung von Trimethylaluminoxan (TMA) in Dioxan wurde unter Kühlung bei Raumtemperatur Wasser in kleinen Portionen zugegeben; die nächste Zugabe erfolgte jeweils nach Abklingen der Gasentwicklung. Die Zugaben wurden so lange fortgesetzt, bis pro Mol TMA ein Mol Methan entwickelt war. Das Lösungsmittel wurde im Vakuum abdestilliert, Reste bei 10⁻⁴ mbar abkondensiert. Das glasige bzw. nach Zerstoßen pulvrige Material wurde nach Beispiel 7 der Hydrolyse, nach Beispiel 8 der Pyrolyse bzw. der Hydrolyse mit anschließender Pyrolyse unterworfen.

### Beispiel 3

### Herstellung von Aluminoxan aus TMA-Diethyletherat in Toluol

Analog Beispiel 1 wurde eine Lösung von TMA-Diethyletherat in Toluol bei -30°C an einer Eisfläche umgesetzt. Nach Ablassen der Lösung aus dem Reaktor wurden enthaltene Al-OH-Gruppierungen durch Zutropfen eines Überschusses von TMA unter Kühlung bei -20 bis -10°C abgefangen. Anschließend wurde das Lösungsmittel sowie überschüssiges TMA im Vakuum entfernt. Die öligen Produkte wurden durch mehrwöchiges Trocknen im Hochvakuum (10⁻⁶ mbar) in einen glasigen Feststoff überführt. Dieser Feststoff war das Ausgangsmaterial für die erfindungsgemäße Behandlung.

### Beispiel 4

### Dotierung von Methylaluminoxan mit Triethylsilanol

Zu einer Lösung von Methylaluminoxan mit einem Methyl-/Aluminium-Verhältnis von 1,65 wird unter Eiskühlung Triethylsilanol gegeben. Dabei wird alles Silanol verbraucht, bis ein Al/Si-Verhältnis erreicht ist und demnach maximal 2/3 der Methylgruppen des Aluminoxans durch Si-O-Gruppen substituiert wurden. Je nach zugegebener Silanolmenge ist das Produkt mehr oder weniger reich an Methylgruppen, die der Hydrolyse unterworfen werden können.

### Beispiel 5

### Dotierung von Methylaluminoxan mit Schwermetallverbindungen

Zu einer Lösung von 25g Methylaluminoxan wurde bei -78°C eine Lösung von 3,5g Eisen(III)acetylacetonat zugetropft. Nach 24 Stunden Stehen bei Raumtemperatur wurde filtriert. Aus dem Filterrückstand wurde nach Vakuumtrocknung ein Produkt mit einem Aluminium/Eisen-Verhältnis von etwa 7 und einem Methyl/Aluminium-Verhältnis von 1,50 erhalten. Das Filtrat lieferte nach Abdestillieren des Lösungsmittels im Vakuum und anschließender Vakuumtrocknung ein Produkt mit einem Aluminium/Eisen-Verhältnis von etwa 1,60 und einem Methyl/Aluminium-Verhältnis von 1,55. Materialien dieser Art dienten als Edukte für die weitere Behandlung nach Beispiel 7 und 8.

### Beispiel 6

### Umsetzung von Methylaluminoxan aus Toluol mit Zeolith

Zur Darstellung wurde das Methylaluminoxan in der doppelten Menge Toluol gelöst. Anschließend wurde der zuvor bei 250°C im Vakuum getrocknete Zeolith H-ZSM-5 in der gewünschten Menge (beispielsweise im Verhältnis Aluminoxan:Zeolith 1:2) zugegeben, wobei Methan entwickelt wurde. Anschließend wurde die Mischung über Nacht unter Rühren stehengelassen. Nach anschließendem vorsichtigen Abdestillieren des Lösungsmittels im Vakuum wurde ein grauer Feststoff erhalten, der der weiteren Umsetzung zugeführt wurde.

### Beispiel 7

### Schonende Hydrolyse von Aluminoxanen (Vergleich)

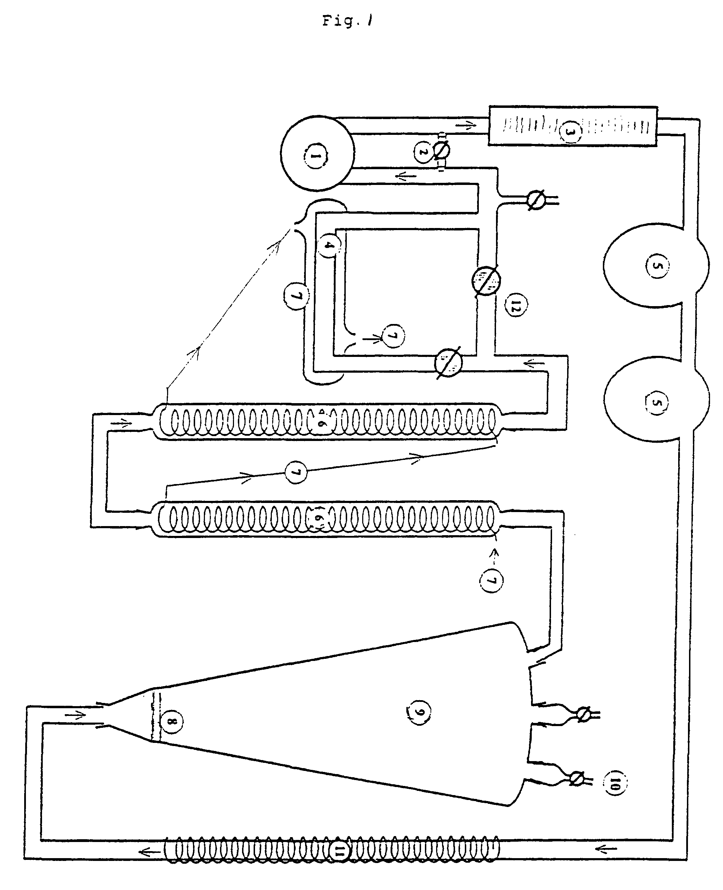

Die Hydrolyse erfolgte in der in der beigefügten Figur skizzierten Apparatur. Die Gasumwälzung erfolgt mit Hilfe einer Membranpumpe 1. Durch den Bypass 2 wird die Gasgeschwindigkeit geregelt, die mittels eines Rotameters 3 gemessen wird. In dem Wasser-(Eis-) Vorrat 4 wird das Gas befeuchtet. Zur Glättung des Gasstromes dienen die Druckstoßausgleichsgefäße 5. Zur Gastemperierung dient der Kühler 6. Der Kühlkreislauf ist mit 7 bezeichnet. Die Wirbelung der Aluminoxane erfolgt in einem mit einer Fritte 8 als Gasverteiler versehenen Wirbelschichtreaktor 9, der mit einer Ableitung 10 zu einer Gasuhr versehen ist. Das Gas wird mit einer Heizspirale 11 erwärmt. Die Wirbelpunkteinstellung erfolgt mit Hilfe eines Bypasses 12. Im Reaktor 9 wird das Aluminoxan zunächst mit absolut trockenem Argon gewirbelt. Nach Einstellung eines vernünftigen Wirbelzustandes (etwa doppelte Gasgeschwindigkeit nach Beginn des Wirbelns [Wirbelpunkt]) wird der Bypass 12 geschlossen und das Wirbelgas durch Überleiten über die gekühlte (-20°C) Eisfläche 4 entsprechend dem über Eis sehr niedrigen Wasserdampfdruck (etwa 0,5 mbar) beladen und nach Erwärmung auf 10°C wieder der Wirbelschicht zugeführt. Die Wirbelung wird solange fortgeführt, bis keine Methanentwicklung (Volumen- oder Druckzunahme) mehr erfolgt.

### Beispiel 8

### Pyrolyse von Aluminoxan (Vergleich) oder Hydrolyseprodukten (erfindungsgemäß)

Das zu pyrolysierende Edukt wird unter Argon als Schutzgas in ein Quarzschlenkrohr überführt und innerhalb von 1,5 Stunden auf 400°C bzw. innerhalb von weiteren 2 Stunden auf 850°C aufgeheizt. Eventuell gebildete flüssige Kondensate werden in einem auf Raumtemperatur gekühlten, nachgeschalteten Schlenkrohr aufgefangen, die Pyrolysegase abgeleitet. Die Endtemperatur wird etwa 24 Stunden aufrechterhalten, anschließend werden die Schlenkrohre bei Raumtemperatur abkühlen gelassen.

Die Ergebnisse sind in der nachstehenden Tabelle angegeben.

**Tabelle**

| Aluminoxan nach Beispiel 1: | | |
|---|---|---|
| | Oberfläche (m²/g) | Porenradius (nm, [%]) |
| Pyrolyse 400°C | 10 | <2 [50], 2-6 [30], 6-15 [15] |
| Pyrolyse 850°C | 7 | <3 [80], 3-6 [18] |
| Hydrolyse | 10 | <2,5 [80], 2,5-10 [17] |
| Hydro- + Pyrolyse 400°C | 200 | 0,5-2,5 [95] |
| Hydro- + Pyrolyse 850°C | 70 | 1,7-2,2 [>95] |

| Aluminoxan nach Beispiel 2: | | |
|---|---|---|
| | Oberfläche (m²/g) | Porenradius (nm, [%]) |
| Pyrolyse 400°C | 85 | <0,5 [25] 0,5-2,5 [67] |
| Pyrolyse 850°C | 9,7 | 0,5-4,0 [80] |
| Hydrolyse | 9,6 | 0,5-5 [85] |
| Hydro- + Pyrolyse 400°C | 184 | 1,9-2,1 [>99] |

| Aluminoxan nach Beispiel 3 | | |
|---|---|---|
| | Oberfläche (m²/g) | Porenradius (nm, [%]) |
| Pyrolyse 400°C | 12 | 0,5-3 [50] 3-12 [40] |
| Pyrolyse 850°C | 59 | 0,5-3 [55] 3-12 [38] |
| Hydrolyse | 10 | <3,0 [60] 3-6 [36] |
| Hydro- + Pyrolyse 400°C | 250 | 1,9-2,1 [>95] |
| Hydro- + Pyrolyse 850°C | 120 | 2,0-2,2 [>95] |

Die Tabelle zeigt, daß durch die Hydrolyse und Thermolyse nicht nur eine sehr hohe spezifische Oberfläche erzeugt wird, sondern auch die Porenradienverteilung in engen Grenzen gehalten wird. Außerdem zeigt die Tabelle, daß das Verfahren nicht auf das in Toluol hergestellte Methylaluminoxan beschränkt ist, sondern auch Aluminoxane, die in Anwesenheit von Diethylether oder Dioxan hergestellt wurden, eine große innere Oberfläche und eine ungewöhnlich enge Porenradienverteilung ergeben können.

## Patentansprüche

1. Aluminiumoxidische Masse, **gekennzeichnet durch** eine spezifische Oberfläche von ≥ 70 m²/g und eine enge Porenradienverteilung von ≥ 90 % zwischen 1,7 und 2,2 nm, worin das Verhältnis MoO₃/Al₂O₃ ≠ 0.13 und das Verhältnis NiO/Al₂O₃ ≠ 0.06 ist

2. Masse nach Anspruch 1, **gekennzeichnet durch** eine spezifische Oberfläche von ≥ 100 m²/g und eine Porenradienverteilung von ≥ 95 % zwischen etwa 1,8 und 2,1 nm.

3. Masse nach Anspruch 1 oder 2, **dadurch gekennzeichnet, daß** sie geringe Anteile an aluminiumoxocarbidischen Strukturen enthält.

4. Masse nach einem der Ansprüche 1 bis 3, **dadurch gekennzeichnet, daß** sie mit Si-O-Strukturen und/oder katalytisch wirksamen Substanzen, insbesondere mit katalytisch wirksamen Metallen, dotiert ist.

5. Masse nach einem der Ansprüche 1 bis 4, **dadurch gekennzeichnet, daß** sie in stückiger Form vorliegt.

6. Masse nach einem der Ansprüche 1 bis 5, **dadurch gekennzeichnet, daß** sie mit mindestens einem Zeolith verbunden ist.

7. Verfahren zur Herstellung der aluminiumoxidischen Masse nach einem der Ansprüche 1 bis 6, **dadurch gekennzeichnet, daß** man ein Aluminoxan mit dem strukturellen Grundelement -Al-O-Al- und/oder einem oligomeren strukturellen Grundelement -Al-O-Al-O-Al-O-Al-, worin die freien Bindungen durch organische Reste, vorzugsweise Alkylreste besetzt sind, zunächst einer schonenden Hydrolyse mit mindestens einem unterhalb der Taupunktsgrenze befeuchteten Inertgas und anschließend einer Thermolyse bei Temperaturen von etwa 300 bis 900°C unterwirft.

8. Verfahren nach Anspruch 7, **dadurch gekennzeichnet, daß** man die Hydrolyse in der Wirbelschicht durchführt.

9. Verfahren nach Anspruch 7 oder 8, **dadurch gekennzeichnet, daß** man die Hydrolyse bei Temperaturen von etwa 0 bis 100 °C durchführt.

10. Verfahren nach einem der Ansprüche 7 bis 9, **dadurch gekennzeichnet, daß** man von einem Aluminoxan ausgeht, in welchem die freien Bindungen durch niedere Alkylgruppen, insbesondere durch Methylgruppen, besetzt sind.

11. Verfahren nach einem der Ansprüche 7 bis 10, **dadurch gekennzeichnet, daß** man von einem in höheren Kohlenwasserstoffen, wie Toluol, oder in polaren Verbindungen, wie Dioxan oder Diethylether gelösten Aluminoxan ausgeht.

12. Verfahren nach einem der Ansprüche 7 bis 11, **dadurch gekennzeichnet, daß** man von einem mit Siloxanen und/oder katalytisch wirksamen Substanzen dotierten Aluminoxan ausgeht.

13. Verfahren nach einem der Ansprüche 7 bis 12, **dadurch gekennzeichnet, daß** man die Umsetzung des Aluminoxans, gegebenenfalls mit den Dotierungssubstanzen, in Gegenwart mindestens eines Zeoliths durchführt und das gegebenenfalls in stückiger Form anfallende Umsetzungsprodukt zerkleinert.

14. Verwendung der Massen nach einem der Ansprüche 1 bis 6 bzw. der nach einem der Ansprüche 7 bis 13 hergestellten Massen zur Herstellung von Katalysatoren und/oder Adsorptionsmitteln.

## Claims

1. Aluminium oxide mass, **characterised by** a specific surface of ≥ 70 m²/g and a narrow pore radius distribution of ≥ 90 % between 1.7 and 2.2 nm, wherein the ratio of MoO₃/Al₂O₃ ≠ 0.13 and the ratio of NiO/Al₂O₃ ≠ 0.06.

2. Mass according to Claim 1, **characterised by** a specific surface of ≥ 100 m²/g and a pore radius distribution of ≥ 95% between approximately 1.8 and 2.1 nm.

3. Mass according to Claim 1 or 2, **characterised in that** it contains small fractions of aluminium oxocarbide structures.

4. Mass according to any one of Claims 1 to 3, **characterised in that** it is doped with Si-O structures and/or catalytically active substances, especially with catalytically active metals.

5. Mass according to any one of Claims 1 to 4, **characterised in that** it is in piece form.

6. Mass according to any one of Claims 1 to 5, **characterised in that** it is bonded with at least one zeolite.

7. Process for the production of the aluminium oxide mass according to any one of Claims 1 to 6, **characterised in that** an aluminoxane with the structural base element -Al-O-Al- and/or an oligomeric structural base element -Al-O-Al-O-Al-O-Al-, in which the free bonds are occupied by organic groups, preferably alkyl groups, was initially subjected to mild hydrolysis with at least one inert gas moistened below the dew point and then to thermolysis at temperatures of approximately 300 to 900°C.

8. Process according to Claim 7, **characterised in that** the hydrolysis is carried out in the fluidised bed.

9. Process according to Claim 7 or 8, **characterised in that** the hydrolysis is carried out at temperatures from approximately 0 to 100°C.

10. Process according to any one of Claims 7 to 9, **characterised in that** one starts from an aluminoxane in which the free bonds are occupied by lower alkyl groups, especially by methyl groups.

11. Process according to any one of Claims 7 to 10, **characterised in that** one starts from an aluminoxane dissolved in higher hydrocarbons, such as toluene, or in polar compounds, such as dioxane or diethyl ether.

12. Process according to any one of Claims 7 to 11, **characterised in that** one starts from an aluminoxane doped with siloxanes and/or catalytically active substances.

13. Process according to any one of Claims 7 to 12, **characterised in that** the conversion of aluminoxane, optionally with the dopants, is carried out in the presence of at least one zeolite and the conversion product optionally formed in piece form is subjected to size reduction.

14. Use of masses according to any one of Claims 1 to 6 or masses produced according to any one of Claims 7 to 13 to produce catalysts and/or adsorption agents.

## Revendications

1. Masse d'oxyde d'aluminium, **caractérisée par** une aire spécifique ≥ à 70 m²/g et par une étroite distribution des rayons des pores, dont ≥ 90 % sont compris entre 1,7 et 2,2 nm, où le rapport de MoO₃/Al₂O₃ ≠ 0,13 et le rapport NiO/Al₂O₃ ≠ 0,06.

2. Masse selon la revendication 1, **caractérisée par** une aire spécifique ≥ à 100 m²/g et par une distribution des rayons des pores dont ≥ 95 % sont compris entre environ 1,8 et 2,1 nm.

3. Masse selon la revendication 1 ou 2, **caractérisée en ce qu'**elle contient de faibles quantités de structures d'oxocarbure d'aluminium.

4. Masse selon l'une des revendications 1 à 3, **caractérisée en ce qu'**elle est dopée par des structures Si-O- et/ou par des substances à effet catalytique, en particulier par des métaux à effet catalytique.

5. Masse selon l'une des revendications 1 à 4, **caractérisée en ce qu'**elle se présente en morceaux.

6. Masse selon l'une des revendications 1 à 5, **caractérisée en ce qu'**elle est reliée à au moins une zéolite.

7. Procédé de fabrication de la masse d'oxyde d'aluminium selon l'une des revendications 1 à 6, **caractérisé en ce qu'**on soumet un aluminoxane ayant l'élément structurel de base -Al-O-Al- et/ou un élément structurel oligomère de base -Al-O-Al-O-Al-O-Al-, où les liaisons libres sont occupées par des restes organiques, de préférence par des restes alkyle, d'abord à une hydrolyse ménagée avec au moins un gaz inerte humidifié en-dessous du point de rosée, puis à une thermolyse à des températures d'environ 300 à 900°C.

8. Procédé selon la revendication 7, **caractérisé en ce qu'**on met en oeuvre l'hydrolyse en lit fluidisé.

9. Procédé selon la revendication 7 ou 8, **caractérisé en ce qu'**on met en oeuvre l'hydrolyse à des températures d'environ 0 à 100°C.

10. Procédé selon l'une des revendications 7 à 9, **caractérisé en ce qu'**on part d'un aluminoxane dans lequel les liaisons libres sont occupées par des groupes alkyle inférieurs, en particulier par des groupes méthyle.

11. Procédé selon l'une des revendications 7 à 10, **caractérisé en ce qu'**on part d'un aluminoxane dissous dans des hydrocarbures supérieurs, tels que le toluène, ou dans des composés polaires tels que le dioxanne ou le diéthyléther.

12. Procédé selon l'une des revendications 7 à 11, **caractérisé en ce qu'**on part d'un aluminoxane dopé par des siloxanes et/ou des substances à effet catalytique.

13. Procédé selon l'une des revendications 7 à 12, **caractérisé en ce qu'**on met en oeuvre la réaction de l'aluminoxane, éventuellement avec les substances dopantes, en présence d'au moins une zéolite, et que l'on broie le produit de réaction, qui éventuellement est obtenu sous forme de morceaux.

14. Utilisation des masses selon l'une des revendications 1 à 6, ou des masses préparées selon l'une des revendications 7 à 13, pour préparer des catalyseurs et/ou des adsorbants.
